# EUROPÄISCHE PATENTSCHRIFT

(11) **EP 2 950 199 B1**
(45) Veröffentlichungstag und Bekanntmachung des Hinweises auf die Patenterteilung: **06.05.2020**
(21) Anmeldenummer: 15168267.1
(22) Anmeldetag: 19.05.2015
(51) Int. Cl.: G06F 3/12

(54) **DRUCKVERFAHREN, ANORDNUNG ZUR REALISIERUNG DES DRUCKVERFAHRENS SOWIE EIN ENTSPRECHENDES COMPUTERPROGRAMM UND EIN ENTSPRECHENDES COMPUTERLESBARES SPEICHERMEDIUM**
PRINTING METHOD, ASSEMBLY FOR REALISING THE PRINTING METHOD AND A CORRESPONDING COMPUTER PROGRAM AND A CORRESPONDING COMPUTER READABLE STORAGE MEDIUM
PROCÉDÉ D'IMPRESSION, SYSTÈME DE RÉALISATION DU PROCÉDÉ D'IMPRESSION, PROGRAMME INFORMATIQUE CORRESPONDANT ET SUPPORT DE STOCKAGE CORRESPONDANT LISIBLE SUR ORDINATEUR

(30) Priorität: 28.05.2014 DE 102014210230
(43) Veröffentlichungstag der Anmeldung: 02.12.2015
(73) Patentinhaber: Cortado AG, 10559 Berlin (DE)
(72) Erfinder: Paschold, Alexander, 10365 Berlin (DE); Pröhl, Mathias, 14050 Berlin (DE)
(74) Vertreter: Gulde & Partner

(56) Entgegenhaltungen:
- EP-A2- 1 343 071
- JP-A- 2004 102 959
- KR-A- 20010 067 777
- US-A1- 2010 238 501
- US-A1- 2013 235 418
- INTERNET-DRAFT K CARTER IBM S ISAACSON NOVELL ET AL: "Internet Printing Protocol/1.0: Directory Schema; draft-ietf-ipp-dir-schema-01.txt", INTERNET PRINTING PROTOCOL/1.0: DIRECTORY SCHEMA; DRAFT-IETF-IPP-DIR-SCHEMA-01.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, vol. ipp, no. 1, 12 June 1997 (1997-06-12) , XP015020498,

## Beschreibung

Die Erfindung betrifft ein Druckverfahren, eine Anordnung zur Realisierung des Druckverfahrens sowie ein entsprechendes Computerprogramm und ein entsprechendes computerlesbares Speichermedium, welche es insbesondere ermöglichen, die Anzahl der von Druckgeräten zu erhöhen, die von einem mobilen Endgerät genutzt werden können.

### Stand der Technik:

Von einem mobilen Gerät mit dem Betriebssystem iOS (iPhone™ Operating System) einen Druckauftrag an einen Drucker zu übertragen ist mit einigen Einschränkungen verbunden, verglichen mit stationären Geräten wie PCs oder anderen mobilen Geräten, wie z.B. Laptops. Es können nur Drucker angesprochen werden, die das Protokoll (Schnittstellensoftware) AirPrint™ beherrschen. Die Drucker werden über das Protokoll Bonjour™ gefunden. Diese Drucker müssen per drahtlosem lokalem Netzwerk (Wireless Local Area Network, WLAN) erreichbar sein und eine Netzwerkadresse im selben Segment wie das mobile Gerät besitzen. Der Drucker muss sich also in der Nähe des mobilen Geräts befinden, von dem aus der Druckauftrag gestartet wird. Die Regelung der Zugriffsrechte auf den Druckern ist nicht einheitlich geregelt, jeder Hersteller ist frei, eine Benutzerverwaltung zu verwenden und diese auszugestalten. Diese Drucklösung für iOS-basierte Mobilgeräte ist somit nur praktikabel in kleinen Umgebungen, d.h. üblicherweise einige bis einige zehn Benutzer und wenige Drucker, in einem räumlich begrenzten Gebiet. In größeren Umgebungen, in denen nicht jedem Benutzer jeder Drucker zur Verfügung stehen soll, stellt dieses Konzept erhebliche Anforderungen an die Verwaltung der Drucker und mobilen Endgeräte, denn jedes neue mobile Gerät muss an jedem Drucker, an dem von mobilen Geräten Druckaufträge geschickt werden dürfen, bekannt gemacht werden. Aus diesem Grund erlauben in der Praxis die Drucker in der Grundeinstellung jedem mobilen Gerät das Drucken. In diesem Umfeld ist es sinnvoll, einen Server zu installieren, der das AirPrint™-Protokoll beherrscht, den Druckauftrag entgegen nimmt und an den gewünschten Drucker weiterleitet. Damit wären die Beschränkungen hinsichtlich der Erreichbarkeit des Druckers aufgehoben. Die Rechteverwaltung ist mit diesem System weiterhin nur umständlich möglich. Beide Verfahren, direktes Drucken mit AirPrint™ oder indirekt über einen AirPrint™-Server haben einige Nachteile, die die vorliegende Erfindung behebt:
- Druckrechte können in der Regel nur einem Gerät eingeräumt werden, nicht einem Benutzer.
- Druckrechte können einem mobilen Endgerät nur am Drucker selbst eingerichtet werden.
- Ob und wie weit Druckrechte an Geräte oder Benutzer vergeben werden können, ist druckerabhängig. Damit ist eine umfassende Verwaltung für alle Benutzer und Geräte nur möglich, wenn alle Drucker eine Benutzer- und Geräteverwaltung ermöglichen.
- Die dazu nötige Administrationsarbeit muss am Gerät selbst geleistet werden, denn die Benutzeroberfläche ist nicht standardisiert. Bestenfalls ist ein rudimentärer Konfigurationsserver auf dem Drucker installiert, so dass der Administrator über das Netzwerk auf den Drucker zugreifen kann. Das Problem der unterschiedlichen Benutzeroberflächen von verschiedenen Druckern wird damit jedoch nicht gelöst.
- Wenn keine Druckrechte vergeben werden, ist jedes Endgerät berechtigt, Druckaufträge an diesen Drucker zu senden. Oder ein Drucker nimmt keinen Druckauftrag an, das kommt auf die Voreinstellung am Drucker an.
- Der Benutzer hat keine Kontrolle über seine Rechte und die verfügbaren Geräte. Das AirPrint™-Protokoll bietet ihm alle erreichbaren Drucker an, ob der Benutzer die Berechtigung hat, den Drucker zu nutzen, erfährt er erst, nachdem er den Druckauftrag gestartet hat.

Ein typisches Szenario in einer AirPrint™-Umgebung sieht aus wie folgt:
1. Administrator hat auf den Druckern die Zugriffsrechte festgelegt.
2. Benutzer wählt die Druckfunktion auf seinem iOS-Gerät aus.
3. Das Gerät bietet ihm alle Drucker an, die sich über das AirPrint™-Protokoll angeboten haben.
4. Der Benutzer wählt einen Drucker aus.
5. Der Druckauftrag wird an den Drucker übertragen.
6. Akzeptiert der Drucker den Auftrag, beginnt der Ausdruck. Ansonsten erfolgt eine Fehlermeldung und der Benutzer muss Schritt 4 wiederholen.
7. Drucker suchen, um Ausdruck abzuholen.

In der KR 2001 0067777 A - wird allgemein ein "INTERNET PRINTING PROTOCOLS SERVER SYSTEM" beschrieben. Gemäß diesem Dokument wird ein lokales Netzwerk (LAN) verwendet, um Informationsdaten an einen Drucker zu übertragen, der mit einem Zieldruckerserver über ein Terminal eines Benutzers verbunden ist. Auch ein Protokoll-Server-System wird beschrieben. In der JP 2004 102959 A - wird allgemein ein "HOSTING PRINTER SERVER SYSTEM" als Server-basierte Druckerverwaltung basierend auf dem Internet Printing Protocol (IPP) beschrieben.

In dem als "INTERNET-DRAFT" bezeichneten Dokument mit dem Titel "Internet Printing ; Protocol/1.0: Directory Schema; draft-ietf-ipp-dir-schema-01.txt" von K. Carter, IBM, und S. Isaacson, Novell, Inc., vom 12. Juni, 1997, werden generell verschiedene Aspekte des damals neuen Internetdruckprotokolls IPP beschrieben.

Die Aufgabe der Erfindung besteht somit darin, ein Druckverfahren, eine Anordnung zur Realisierung des Druckverfahrens sowie ein entsprechendes Computerprogramm und ein entsprechendes computerlesbares Speichermedium bereitzustellen, welche die Nachteile der bekannten Lösungen beheben und es insbesondere erleichtern, von mobilen Endgeräten aus zu drucken.

Diese Aufgabe wird erfindungsgemäß durch die Merkmale in den Ansprüchen 1, 5, 6 und 7 gelöst. Zweckmäßige Ausgestaltungen der Erfindung sind in den Unteransprüchen enthalten.

Ein besonderer Vorteil der vorliegenden Erfindung besteht darin, dass für mobile Endgeräte die Anzahl von nutzbaren Druckgeräten vergrößert wird. Dies wird erreicht, indem ein Druckverfahren bereitgestellt wird, bei dem ein mobiles Endgerät, beispielsweise ein mobiles Endgerät, auf dem das Betriebssystem iOS installiert ist, über eine drahtlose Kommunikationsverbindung mit einem Server kommuniziert. Die Kommunikation kann dabei jedes bekannte oder noch zu entwickelnde Kommunikationsprotokoll nutzen, insbesondere auch Kommunikationsprotokolle, welche die Nutzung von Druckgeräten nur in einem eingeschränkten Umkreis, beispielsweise beschränkt auf bestimmte Netzwerkadressen der Druckgeräte, wie es z.B. bei dem AirPrint™-Protokoll der Fall ist. (Der Server müsste dann bei Einsatz der Erfindung beispielsweise eine entsprechende Netzwerkadresse aufweisen, aber die von ihm unterstützten Druckgeräte nicht mehr.) Erfindungsgemäß werden auszudruckende Daten von dem mobilen Endgerät über den Server an ein Druckgerät gesendet.

Erfindungsgemäß ist weiter vorgesehen, dass auf dem mobilen Endgerät Daten hinterlegt sind, welche zumindest Informationen zu einem Druckgerät oder zu mehreren Druckgeräten und Schlüssel umfassen, wobei jedem Druckgerät mindestens ein Schlüssel zugeordnet ist. Diese Daten können ursprünglich auf der Datenverarbeitungseinrichtung, auf der der Server installiert ist, oder einer anderen Datenverarbeitungseinrichtung generiert worden sein. Vorzugsweise sind die Schlüssel auch einem Nutzer assoziiert, so dass auf dem Server oder der anderen Datenverarbeitungseinrichtung durch die Generierung der Daten ein Nutzerprofil erstellt wird, welches Informationen zu Druckgeräten umfasst, die durch einen bestimmten Nutzer genutzt werden können, sowie Schlüssel, die den Druckgeräten zugeordnet sind. Vorzugsweise sind die Schlüssel auch nutzerspezifisch, so dass jeder Schlüssel nur mit einem Nutzer assoziiert (für einen Nutzer vergeben) ist. (Die Daten, welche zumindest Informationen zu einem oder mehreren Druckgeräten und Schlüssel umfassen, werden im folgenden auch als Nutzerprofil bezeichnet. Ein Nutzerprofil ist somit einem Nutzer zugeordnet.) Von der Datenverarbeitungseinrichtung, auf der der Server installiert ist, oder der anderen Datenverarbeitungseinrichtung können die Daten durch automatische oder halbautomatische Übermittlung oder durch manuellen Abruf an das mobile Endgerät übertragen werden. Auf der anderen Datenverarbeitungseinrichtung kann beispielsweise ein Email-Server, ein Webserver oder ein Server zur Mobilgeräteverwaltung (Mobile Device Management (MDM) Server) installiert sein, der das Nutzerprofil an das mobile Endgerät sendet. Die andere Datenverarbeitungseinrichtung wird im folgenden auch als Kommunikationsserver bezeichnet.

Soll von dem mobilen Endgerät aus ein Inhalt ausgedruckt werden, wird erfindungsgemäß zwischen dem mobilen Endgerät und dem Server eine Kommunikationsverbindung hergestellt. Vorzugsweise kommuniziert das mobile Endgerät über eine drahtlose Kommunikationsschnittstelle mit dem Server. Die Kommunikationsverbindung weist somit zumindest teilweise drahtlose Kommunikationsstrecken auf. In einer bevorzugten Ausführungsform wird die Verbindung zu dem Server hergestellt in Reaktion auf die Aktivierung einer Druckfunktion auf dem mobilen Endgerät, also beispielsweise nachdem ein Nutzer des mobilen Endgeräts einen Druckbutton einer Anwendung, wie z.B. Microsoft™ Word, betätigt hat. Vorzugsweise wird beim Verbindungsaufbau oder (kurz) nachdem die Verbindung hergestellt wurde, mindestens ein Schlüssel an den Server übertragen. Nachdem die Verbindung zwischen dem mobilen Endgerät und dem Server hergestellt wurde, werden in einer bevorzugten Ausführungsform durch den Server die verfügbaren Druckgeräte ermittelt, die für den Druck des Inhalts genutzt werden können. Bei dieser Ermittlung wird u.a. geprüft, ob ein Druckgerät vom Server aus technisch erreichbar ist. Vorzugsweise wird dabei auf dem Server auch geprüft, ob der mindestens eine vom Endgerät gesendete Schlüssel für den Nutzer und/oder die vorhandenen Druckgeräte gültig ist.

Anschließend werden Informationen über zumindest einen Teil der nutzbaren Druckgeräte von dem Server an das mobile Endgerät übertragen. Diese Informationen werden von dem Nutzer des mobilen Endgeräts genutzt, um ein geeignetes Druckgerät zu wählen, auf dem der Inhalt gedruckt werden soll. Nutzbar heißt in diesem Zusammenhang, die Drucker sind für den Benutzer nutzbar, es sind also alle technischen Bedingungen erfüllt, um einen Druckvorgang auf diesem Gerät auszulösen. Aus dem Stand der Technik ist es bekannt, dem mobilen Endgerät Informationen über Drucker im Nutzerprofil mitzuteilen. Diese Drucker werden dem Benutzer, sobald dieser den Druckvorgang ausgelöst hat, immer angeboten. Ihre Erreichbarkeit wird nicht geprüft. So ist es z.B. möglich, dass diese Geräte entfernt worden sind, der Administrator ihnen eine neue Adresse oder einen neuen Namen zugewiesen hat, oder sie schlicht ausgeschaltet sind. Dies erfährt der Benutzer im Stand der Technik erst durch eine Fehlermeldung. Insoweit erweitert die vorgestellte Erfindung auch an dieser Stelle den Stand der Technik, da hier diese Drucker bei der Prüfung auf dem Server ausgefiltert werden.

Gemäß einer bevorzugten Ausführungsform ist zumindest ein Teil der Schlüssel im Netzwerknamen der Drucker enthalten. Wenn ein Nutzer ein Druckgerät gewählt, die Druckeinstellungen festgelegt und den Ausdruck freigegeben hat, wird der Schlüssel im Netzwerknamen des Druckers an den Server übertragen, wo der Schlüssel und das gewählte Druckgerät aus dem Netzwerknamen extrahiert werden. Anhand des Schlüssels wird die Berechtigung des Nutzers zur Verwendung des Druckgeräts und/oder der eingestellten Druckeistellungen geprüft. Ist der Nutzer berechtigt, werden die Druckdaten an das ermittelte Druckgerät gesendet. Die Schlüssel können jedoch auch auf alternativen Wegen vom Endgerät an den Server, beispielsweise als Parameter innerhalb des Kommunikationsprotokolls, übermittelt werden.

In einer bevorzugten Ausführungsform sind auf dem Server Druckerobjekte eingerichtet, die jeweils ein Druckgerät adressieren. Eine bevorzugte Ausführungsform sieht dabei vor, dass die Druckerobjekte Druckeinstellungen definieren. Das hat den besonderen Vorteil, dass somit für ein Druckgerät verschiedene Druckerobjekte angelegt sind, die sich durch die Druckeinstellungen oder den Namen des Druckerobjekts unterscheiden. Desweiteren erweist es sich als vorteilhaft, wenn die Druckobjekte einem Nutzer zugeordnet sind. Auf diese Weise kann ein erstes Druckerobjekt, das ein erstes Druckgerät adressiert, erste Druckeinstellungen bereitstellt und einem ersten Nutzer zugeordnet ist, und ein zweites Druckerobjekt angelegt sein, das ebenfalls das erste Druckgerät adressiert aber zweite Druckeinstellungen bereitstellt und dem ersten oder einem zweiten Nutzer zugeordnet ist. Vorzugsweise umfassen die Informationen über zumindest einen Teil der nutzbaren Druckgeräte die Druckerobjekte, die dem Nutzer zugeordnet sind und nutzbare Druckgeräte adressieren. Die Druckerobjekte sind also vorzugsweise nutzerspezifisch angelegt.

Nach Wahl des Druckgeräts werden von dem mobilen Endgerät Angaben über das gewählte Druckgerät und gegebenenfalls weitere Angaben über Druckeinstellungen und die zum Drucken vorgesehenen Daten bzw. Informationen mit deren Hilfe der Server sich die zum Drucken vorgesehenen Daten von einem entfernten Speicherort beschaffen kann, an den Server übertragen. In einer bevorzugten Ausführungsform der Erfindung ist vorgesehen, dass dem Nutzer des mobilen Endgeräts nach Aktivierung der Druckfunktion (und Übertragung der Druckerobjekte) die Druckerobjekte zur Wahl angeboten werden. Nach Wahl eines Druckerobjekts hat dann der Nutzer die Möglichkeit, Druckeinstellungen zu definieren oder Voreinstellungen von Druckeinstellungen zu ändern. Nachdem das Druckgerät über das entsprechende Druckerobjekt gewählt und die Druckeinstellungen vorgenommen wurden, werden die Wahl und die Druckeinstellungen bestätigt und zusammen mit den zum Druck vorgesehenen Daten und dem dem Druckerobjekt zugeordneten Schlüssel an den Server übertragen. In einer weiteren Ausführungsform ist vorgesehen, dass anstelle der zum Druck vorgesehenen Daten Informationen an den Server gesendet werden, die den Server in die Lage versetzen, die zum Druck vorgesehenen Daten von einem entfernten Speicherort in einem Datennetz abzurufen. Bei den Informationen, die den Server in die Lage versetzen, die Daten abzurufen, kann es sich beispielsweise um eine Netzwerkadresse, wie z.B. einen einheitlichen Quellenanzeiger (Uniform Resource Locator, URL), der Daten handeln.

In einer bevorzugten Ausführungsform ist vorgesehen, dass auf dem Server geprüft wird, ob der vom Endgerät gesendete Schlüssel für das gewählte Druckgerät, den Nutzer und/oder die vorgenommenen Druckeinstellungen gültig ist. Wird festgestellt, dass der Schlüssel gültig ist, werden die zum Druck vorgesehenen Daten an das gewählte Druckgerät gesendet und dort ausgedruckt.

Eine bevorzugte Ausführungsform sieht vor, dass zumindest ein Teil der in dem Nutzerprofil des Nutzers enthaltenen Druckgerätenamen und Schlüssel bereits sofort nach Herstellung der Verbindung zwischen dem mobilen Endgerät und dem Server (in Reaktion auf die Aktivierung der Druckfunktion) an den Server gesendet werden und der Server zu den übersandten Druckgerätenamen die (aktuell) verfügbaren Druckgeräte ermittelt, zu denen ein gültiger Schlüssel übersandt wurde. Das hat den Vorteil, dass dem Nutzer dann lediglich die Informationen von dem Server an das mobile Endgerät übertragen werden, die Druckgeräte betreffen, für die ein gültiger Schlüssel vorliegt. Zusätzlich kann vorgesehen sein, nach Vornahme von Druckeinstellungen eine erneute Prüfung der Gültigkeit des Schlüssels vorzunehmen, wenn auch die Druckeinstellungen an einen gültigen Schlüssel gebunden sind.

In einer weiteren bevorzugten Ausführungsform ist vorgesehen, dass für die Verwaltung der Nutzerprofile und die Schlüsselprüfung ein spezieller Server mit einer Benutzerverwaltung eingesetzt ist. Der Server mit der Benutzerverwaltung kann in der Kommunikationsverbindung zwischen dem mobilen Endgerät und dem Druckserver angeordnet sein, so dass alle Kommunikation zwischen dem mobilen Endgerät und dem Druckserver über den Server mit der Benutzerverwaltung läuft. Der Server mit der Benutzerverwaltung kann aber auch nur vom Druckserver aus erreichbar sein. Auf jeden Fall kommuniziert der Druckserver mit dem Server zur Benutzerverwaltung, um Informationen darüber zu erhalten, ob die zum Druck vorgesehenen Daten an das gewählte Druckgerät gesendet werden dürfen. In einer bevorzugten Ausführungsform werden die zum Druck vorgesehenen Daten vor der Übertragung an das gewählte Druckgerät in ein auf das gewählte Druckgerät abgestimmtes Format gewandelt werden.

Die Erfindung kann beispielsweise durch ein Verfahren zum Drucken von mobilen Endgeräten aus über eine drahtlose Verbindung auf Netzwerkdruckern mit Hilfe mindestens eines Druckservers umgesetzt werden, bei dem
auf dem Druckserver Druckerobjekte eingerichtet sind, die der zentralen Benutzerverwaltung als Drucker angeboten werden,
auf einer zentralen Benutzerverwaltung eine Liste von Benutzern und eine Liste der vorhandenen Drucker vorgehalten wird,
in der zentralen Benutzerverwaltung jedem Benutzer eine eigene Liste von Druckern bereit gestellt wird,
für jede Kombination aus Benutzer und Drucker ein eindeutiger Schlüssel erstellt wird,
dem mobilen Endgerät, auf dem sich der der Benutzer im System anmeldet, bei der Anmeldung vom Druckserver die dem Benutzer zugeordnete Liste von Druckern zusammen mit den Schlüsseln übertragen wird,
der Schlüssel bei jedem Druckauftrag an den Druckserver übertragen wird,
nach Auswahl eines Druckers und Übermittlung des Druckauftrags an den Druckserver der Druckserver bei der zentralen Benutzerverwaltung den Schlüssel überprüft, und
der Druckserver den Druckauftrag an den ausgewählten Drucker weiterleitet.

Dabei kann es sich bei dem Server, der die Druckerliste an das mobile Endgerät übermittelt, um einen Email-Server, einen Webserver oder einen MDM-Server und bei dem mobilen Endgeräten um Geräte mit dem Betriebssystem iOS handeln.

Es kann dabei vorgesehen sein, dass zur Kommunikation zwischen mobilem Endgerät und Druckserver das AirPrint™-Protokoll verwendet wird.

Eine Anordnung nach der Erfindung weist mindestens einen Chip und/oder Prozessor auf und ist derart eingerichtet, dass ein Druckverfahren ausführbar ist, bei dem ein mobiles Endgerät über eine Schnittstelle für eine drahtlose Kommunikation mit einem Server kommuniziert und über den Server zum Ausdruck bestimmte Daten an ein Druckgerät sendet, wobei auf dem mobilen Endgerät Daten hinterlegt sind, welche zumindest ein Druckgerät bezeichnende Informationen und mindestens einen dem Druckgerät zugeordneten Schlüssel umfassen, und wobei das Verfahren folgende Schritte umfasst:
- Herstellen einer Kommunikationsverbindung zwischen dem mobilen Endgerät dem Server,
- Ermitteln, auf dem Server, von nutzbaren Druckgeräten,
- Senden von Informationen zu den nutzbaren Druckgeräte von dem Server an das mobile Endgerät,
- Wahl, auf dem mobilen Endgerät, eines nutzbaren Druckgeräts,
- Senden der zum Ausdruck bestimmten Daten oder von Informationen, die den Server in die Lage versetzen, die zum Ausdruck vorgesehenen Daten von einem entfernten Speicherort in einem Datennetz abzurufen, von dem mobilen Endgerät an den Server,
- vor dem Senden der zum Ausdruck bestimmten Daten an das gewählte Druckgerät Prüfen, auf dem Server, der Gültigkeit eines oder mehrerer von dem mobilen Endgerät gesendeten Schlüssel, und
- in Abhängigkeit von der Gültigkeit des oder der Schlüssel, Senden der zum Ausdruck bestimmten Daten an das gewählte Druckgerät.

Durch die Beschreibung der Verfahrensschritte soll keine Reihenfolge für deren Ausführung festgelegt werden. Insbesondere kann die Prüfung der von dem mobilen Endgerät gesendeten Schlüssel auch direkt im Anschluss an die Herstellung der Kommunikationsverbindung zwischen dem mobilen Endgerät dem Server, erfolgen.

Ein erfindungsgemäßes Computerprogramm ermöglicht es einer Datenverarbeitungseinrichtung, nachdem es in den Speicher der Datenverarbeitungseinrichtung geladen worden ist, ein Druckverfahren durchzuführen, bei dem ein mobiles Endgerät über eine Schnittstelle für eine drahtlose Kommunikation mit einem Server kommuniziert und über den Server zum Ausdruck bestimmte Daten an ein Druckgerät sendet, wobei auf dem mobilen Endgerät Daten hinterlegt sind, welche zumindest ein Druckgerät bezeichnende Informationen und mindestens einen dem Druckgerät zugeordneten Schlüssel umfassen, und wobei das Verfahren folgende Schritte umfasst:
- Herstellen einer Kommunikationsverbindung zwischen dem mobilen Endgerät dem Server,
- Ermitteln, auf dem Server, von nutzbaren Druckgeräten,
- Senden von Informationen zu den nutzbaren Druckgeräte von dem Server an das mobile Endgerät,
- Wahl, auf dem mobilen Endgerät, eines nutzbaren Druckgeräts,
- Senden der zum Ausdruck bestimmten Daten oder von Informationen, die den Server in die Lage versetzen, die zum Ausdruck vorgesehenen Daten von einem entfernten Speicherort in einem Datennetz abzurufen, von dem mobilen Endgerät an den Server,
- Prüfen, auf dem Server, der Gültigkeit eines oder mehrerer von dem mobilen Endgerät gesendeten Schlüssel, und
- in Abhängigkeit von der Gültigkeit des oder der Schlüssel, Senden der zum Ausdruck bestimmten Daten an das gewählte Druckgerät.

In einer weiteren bevorzugten Ausführungsform der Erfindung ist vorgesehen, dass das erfindungsgemäße Computerprogramm modular aufgebaut ist, wobei einzelne Module auf verschiedenen Datenverarbeitungseinrichtungen installiert sind.

Vorteilhafte Ausführungsformen sehen zusätzlich Computerprogramme vor, durch welche weitere in der Beschreibung angegebene Verfahrensschritte oder Verfahrensabläufe ausgeführt werden können.

Solche Computerprogramme können beispielsweise (gegen Gebühr oder unentgeltlich, frei zugänglich oder passwortgeschützt) downloadbar in einem Daten- oder Kommunikationsnetz bereitgestellt werden. Die so bereitgestellten Computerprogramme können dann durch ein Verfahren nutzbar gemacht werden, bei dem ein Computerprogramm nach Anspruch 6 aus einem elektronischen Datennetz, wie beispielsweise aus dem Internet, auf eine an das Datennetz angeschlossene Datenverarbeitungseinrichtung heruntergeladen wird.

Um das erfindungsgemäße Verfahren durchzuführen, ist vorgesehen, ein computerlesbares Speichermedium einzusetzen, auf dem ein Programm gespeichert ist, das es einer Datenverarbeitungseinrichtung ermöglicht, nachdem es in den Speicher der Datenverarbeitungseinrichtung geladen worden ist, ein Druckverfahren durchzuführen, bei dem ein mobiles Endgerät über eine Schnittstelle für eine drahtlose Kommunikation mit einem Server kommuniziert und über den Server zum Ausdruck bestimmte Daten an ein Druckgerät sendet, wobei auf dem mobilen Endgerät Daten hinterlegt sind, welche zumindest ein Druckgerät bezeichnende Informationen und mindestens einen dem Druckgerät zugeordneten Schlüssel umfassen, und wobei das Verfahren folgende Schritte umfasst:
- Herstellen einer Kommunikationsverbindung zwischen dem mobilen Endgerät dem Server,
- Ermitteln, auf dem Server, von nutzbaren Druckgeräten,
- Senden von Informationen zu den nutzbaren Druckgeräte von dem Server an das mobile Endgerät,
- Wahl, auf dem mobilen Endgerät, eines nutzbaren Druckgeräts,
- Senden der zum Ausdruck bestimmten Daten oder von Informationen, die den Server in die Lage versetzen, die zum Ausdruck vorgesehenen Daten von einem entfernten Speicherort in einem Datennetz abzurufen, von dem mobilen Endgerät an den Server,
- Prüfen, auf dem Server, der Gültigkeit eines oder mehrerer von dem mobilen Endgerät gesendeten Schlüssel, und
- in Abhängigkeit von der Gültigkeit des oder der Schlüssel, Senden der zum Ausdruck bestimmten Daten an das gewählte Druckgerät.

Durch das erfindungsgemäße Verfahren wird u.a. erreicht, dass dem Benutzer bei Vermeidung der Mängel des Standes der Technik weiterhin die vertraute Umgebung zum Drucken zur Verfügung gestellt wird. Er wird dieselben Schritte 1-7 durchlaufen, die oben als typisches Szenario für eine AirPrint™-Umgebung beschrieben wurden, bis auf den Schritt 1. Der Abbruch in Schritt 6 wird durch die Erfindung ebenfalls ausgeschlossen.

Die Erfindung soll nachstehend anhand von einem zumindest teilweise in den Figuren dargestellten Ausführungsbeispiel näher erläutert werden. Es zeigen:
- Fig. 1:: ein beispielhaftes System zur Durchführung des erfindungsgemäßen Druckverfahrens und
- Fig. 2:: ein beispielhaftes Nutzerprofil.

Nachfolgend wird die Erfindung an einem beispielhaften Netzwerk beschrieben, welches konfiguriert ist, um eine beispielhafte Ausführungsform des erfindungsgemäßen Verfahrens auszuführen. Die Erfindung ist jedoch nicht auf das beispielhaft beschriebenen Netzwerk bzw. Verfahren beschränkt. Vielmehr ist es möglich, das erfindungsgemäße Verfahren auch mit anders aufgebauten Netzwerken oder mit Verfahren auszuführen, die andere Verfahrensschritte aufweisen. So können beispielsweise Druckserver 110, Kommunikationsserver 114 und/oder zentrale Benutzerverwaltung 112 auch auf einer Datenverarbeitungseinrichtung installiert sein. Ebenso ist es möglich, den Druckserver 110 mit Informationen auszustatten, die es ihm ermöglichen, ohne Verbindung zu der zentralen Benutzerverwaltung 112 die Gültigkeit der Schlüssel zu prüfen. Auch kann die Prüfung der Gültigkeit der Schlüssel zu jedem beliebigen Zeitpunkt zwischen Anmeldung des Nutzers in dem Netzwerk und dem Senden der zum Ausdruck bestimmten Daten an das gewählte Druckgerät 108 erfolgen.

Zusätzlich zu den bereits im Zusammenhang mit dem Stand der Technik beschriebenen Komponenten mobiles Endgerät 102, Druckgeräten 104, 106, 108 und dem Server, der das AirPrint™-Protokoll beherrscht (AirPrint™-Server), werden in einer beispielhaften Drucksystem 100 eine zentrale Benutzerverwaltung 112 und ein Kommunikationsserver 114 eingeführt. Der AirPrint™-Server wird erfindungsgemäß mit weiteren Funktionalitäten ausgestattet, die vor allem die Benutzerverwaltung und Schlüsselprüfung betreffen. Der um die zusätzlichen Funktionalitäten erweiterte AirPrint™-Server wird im folgenden als erweiterter Druckserver 110 bezeichnet. Der Kommunikationsserver 114 überträgt die Nutzerprofile 200 an das mobile Endgerät 102. Dabei kann es sich um einen MDM-, Web- oder Email-Server handeln, jede andere technische Einrichtung, die die Übermittlung der Nutzerprofile 200 an das Endgerät 102 übermittelt, ist ebenso möglich.

Die zentrale Benutzerverwaltung 112 ersetzt die Rechteverwaltung, die bisher an jedem einzelnen Druckgerät 104, 106, 108 für jedes einzelne mobile Endgerät 102 durchgeführt werden musste. Sie bietet darüber hinaus weitere Vorteile. So werden Benutzer und Endgerät 102 entkoppelt. Jeder Benutzer, der sich an und mit einem mobilen Endgerät 102 an der zentralen Benutzerverwaltung 112 angemeldet hat, kann die ihm zugeteilten Druckgeräte 104, 106, 108 verwenden, unabhängig vom verwendeten mobilen Endgerät 102.

Im Stand der Technik muss, um überhaupt eine Druckrechteverwaltung durchzuführen, ein Endgerät 102 an jedem Druckgerät 104, 106, 108 angemeldet werden, der genutzt werden soll. Damit war auch der Benutzer auf ein bestimmtes Endgerät 102 festgelegt, wenn er seine bevorzugten Druckgeräte 104, 106, 108 nutzen will. Im vorgestellten Verfahren ist weiterhin eine Anmeldung nötig, diese erfolgt einmalig im System 100 und gilt für alle Druckgeräte 104, 106, 108 und alle vom Benutzer genutzten mobilen Endgeräte 102. Die zentrale Benutzerverwaltung 112 enthält eine Liste der Druckgeräte und Benutzer. Für jeden Benutzer wird eine Liste von Druckgeräten 104, 106, 108 verwaltet. Zusätzlich wird für jede Kombination eines Benutzers mit einem Druckgerät 104, 106, 108 ein eindeutiger Schlüssel erstellt. Der Stand der Technik wird hier bereits mehrfach überschritten, die Verwaltung der Benutzer ist vom Endgerät 102 gelöst, die umständliche Rechteverwaltung an den einzelnen Druckgeräten 104, 106, 108 wird durch eine zentrale Instanz, die zentrale Benutzerverwaltung 112, ersetzt, die Verbindung eines Benutzers zu einem Druckgerät 104, 106, 108 wird über einen Schlüssel abgesichert.

Der Druckserver 110 ist zentral für die Verwaltung der Druckaufträge aller Benutzer zuständig. Er kommuniziert mit den mobilen Endgeräten 102 über das AirPrint™-Protokoll. Darüber hinaus hält er eine Verbindung zur zentralen Benutzerverwaltung 112, um die Gültigkeit der Schlüssel zu überprüfen. Diese Prüfung ist aus dem Stand der Technik nicht bekannt.

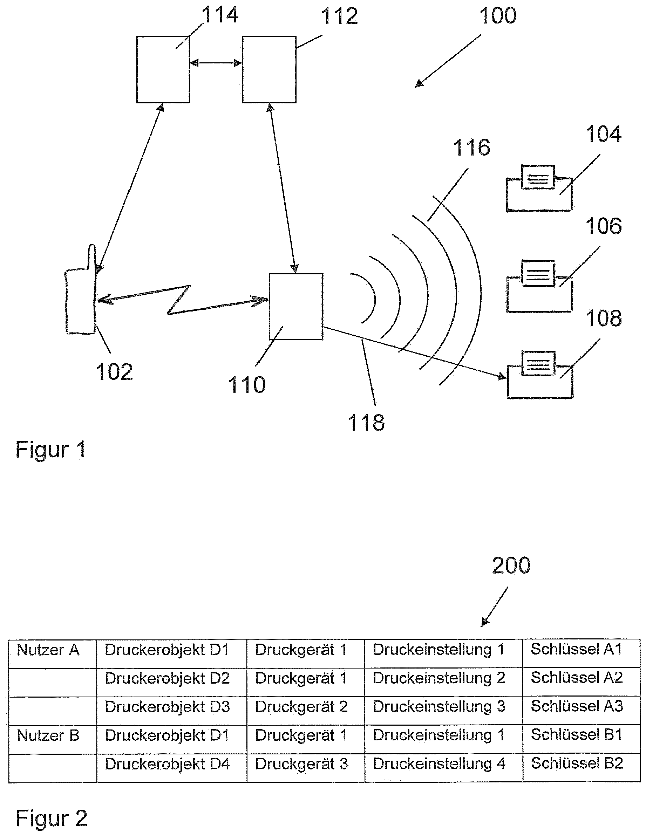

Auf dem Druckserver 110 können verschiedene Druckerobjekte eingerichtet werden, die dasselbe Druckgerät 104, 106, 108 adressieren, sich aber in den Druckeinstellungen unterscheiden. Verschiedene Druckerobjekte mit gleichen Einstellungen sind ebenso möglich, beispielsweise um aussagekräftige Namen vergeben zu können. Diese Druckerobjekte werden in der zentralen Benutzerverwaltung 112 als Drucker verwaltet und vom Kommunikationsserver 114 als Drucker an das Endgerät 102 übermittelt. So ist es beispielsweise möglich, mehreren Benutzern dasselbe Druckgerät 104, 106, 108 zuzuweisen, die Druckeinstellungen für jeden Benutzer aber individuell festzulegen. Benutzer A hat beispielsweise die Möglichkeit des Farbdrucks, Benutzer B kann auf demselben Druckgerät 104, 106, 108 nur in Schwarz-Weiß drucken. Das wird über zwei unterschiedliche Druckerobjekte realisiert, die als unterschiedliche Drucker in der zentralen Benutzerverwaltung für die verschiedenen Benutzer hinterlegt werden. Ebenso ist es möglich, einem Benutzer Druckerobjekte mit unterschiedlichen Eigenschaften für ein Druckgerät 104, 106, 108 einzurichten. Damit werden dem Benutzer mehrere Drucker angeboten, die auf dasselbe Druckgerät 104, 106, 108 drucken, allerdings mit unterschiedlichen Eigenschaften, beispielsweise bekommt Benutzer A zwei Drucker D1 und D2, wobei D1 in Farbe druckt und D2 in Schwarz-Weiß druckt, die Druckdaten werden vom Druckserver 110 abschließend an dasselbe Druckgerät 104, 106, 108 geleitet. Erfindungsgemäß sind die Einstellungen nicht auf die hier beschriebenen beschränkt. Jede Einstellung oder Kombination von Einstellungen, die für ein Druckgerät 104, 106, 108 vorgenommen werden können, können zusammen mit einem Drucker ein eigenes Druckerobjekt bilden. Ein Druckgerät 104, 106, 108 kann in beliebig vielen Druckerobjekten verwendet werden, während ein Druckerobjekt in der zentralen Benutzerverwaltung als genau ein Drucker erscheint. Zwei beispielhafte Nutzerprofile 200, die solche Druckerobjekte als Kombinationen aus Druckgerät 104, 106, 108, Druckeinstellungen und Schlüssel veranschaulichen, sind in Figur 2 gezeigt. Die Zuordnung der Druckerobjekte zu den Benutzern erfolgt dann in der zentralen Benutzerverwaltung 112. Ein weiterer Vorteil gegenüber dem Stand der Technik ist die größere Anzahl an verfügbaren Druckgeräten 104, 106, 108. Da die Druckgeräte 104, 106, 108, nicht mehr mit dem mobilen Endgerät 102 kommunizieren, können alle Druckgeräte 104, 106, 108 verwendet werden, für die ein Treiber für den Druckserver 110 existiert. Das Airprint™-Protokoll implementieren die Hersteller als weiteres neben einem eigenem oder einem weiterem Standard. So beschränkt der Stand der Technik den Benutzer auf eine kleinere Anzahl von Druckgeräten 104, 106, 108.

Der Kommunikationsserver 114 erstellt zusammen mit der zentralen Benutzerverwaltung 112 ein Nutzerprofil 200 mit den für diesen Benutzer eingerichteten Druckern (den Druckobjekten auf dem Druckserver 110). Das Nutzerprofil 200 mit der Liste der Drucker und den Schlüsseln kann dem Benutzer auf das aktuell genutzte mobile Endgerät 102 auf drei Arten übertragen werden:
Automatische Übermittlung: Bei der Anmeldung des Benutzers im System 100 überträgt der Kommunikationsserver 114 das Nutzerprofil 200 auf das Endgerät 102. Dies ist beispielsweise der Fall, wenn ein MDM-Server verwendet wird.
Halbautomatische Übermittlung: Nachdem sich der Benutzer im System 100 angemeldet hat, wird ihm vom Kommunikationsserver 114 eine Nachricht übermittelt, in der die Daten des Nutzerprofils 200 stehen, oder zumindest ein Verweis auf die Daten. Dies kann beispielsweise mit einer Email geschehen. Dem Benutzer steht es an dann frei, die erhaltenen Daten zu nutzen.
Manuelle Anforderung: Der Benutzer muss aktiv die Daten des Nutzerprofils 200 beim Kommunikationsserver 114 anfordern. Dies ist z.B. möglich durch eine Email oder das Aufsuchen einer bestimmten Webseite. Hat der Benutzer das getan, wird weiter wie bei einer halbautomatischen Übermittlung verfahren.

Die Anmeldung des Benutzers kann z.B. über einen LDAP-Server (LDAP: Lightweight Directory Access Protocol, Leichtgewichtiges Verzeichniszugriffsprotokoll) oder dergleichen geschehen. Für das erfindungsgemäße Verfahren ist lediglich wichtig, dass die zentrale Benutzerverwaltung 112 und der Kommunikationsserver 114 Kenntnis von der Anmeldung haben und der Kommunikationsserver 114 mit dem Endgerät 102, von dem aus die Anmeldung erfolgt ist, kommunizieren kann, um das Nutzerprofil 200 zu übermitteln.

Im Stand der Technik werden durch das Airprint™-Protokoll gefundene Druckgeräte auf dem Endgerät 102 angezeigt. Dies kann auch durch die vorliegende Erfindung nicht verhindert werden. Um die Benutzung dieser Druckgeräte zu verhindern und damit den Einsatz der Erfindung sicher zu stellen, kann entweder die Annahme von Druckaufträgen von allen Druckgeräten, d.h. Geräten, außer dem Druckserver 110 verweigert werden, oder die AirPrint™-Funktionalität wird auf den Druckgeräten 104, 106, 108 deaktiviert. Die zweite Methode ist zu bevorzugen, denn dann werden nur die erfindungsgemäßen Druckgeräte 104, 106, 108 auf dem Endgerät 102 angezeigt. Eine Anzeige aller über Airprint™/Bonjour™ gefundenen Druckgeräte steht dem erfindungsgemäßen Vorgang nicht entgegen.

Ein beispielhafter Ablauf eines Druckvorgangs gemäß der Erfindung gestaltet sich wie folgt:
- Der Administrator hat den Benutzer und ihm zugewiesene Druckgeräte 104, 106, 108 in der zentralen Benutzerverwaltung 112 hinterlegt.
- Der Benutzer meldet sich an seinem mobilen Endgerät 102 im System 100 an.
- Er erhält eine Liste von Druckern zusammen mit den Schlüsseln.
- Der Benutzer löst die Druckfunktion aus.
- Bevor die Liste der Drucker angezeigt wird, sendet der Client diese zusammen mit den Schlüsseln an den Druckserver 110.
- Der Druckserver überprüft in einem Schritt 116, ob die in der Liste enthaltenen Druckgeräte 104, 106, 108 aktuell ansprechbar sind. Die Kommunikation zwischen dem Druckserver 110 und den Druckgeräten 104, 106, 108 kann drahtlos, drahtgebunden erfolgen oder über eine Kombination aus drahtlosen und drahtgebundenen Kommunikationsverbindungen.
- Druckgeräte 104, 106, 108, die nicht antworten, werden aus der Liste entfernt.
- Der Druckserver 110 überprüft zusammen mit der zentralen Benutzerverwaltung 112 die Gültigkeit der Schlüssel.
- Die Liste der aktiven Druckgeräte 104, 106, 108 mit gültigem Schlüssel wird an den Client zurückgesendet.
- Der Benutzer wählt einen Drucker aus
- Die Druckdaten werden an den Druckserver 110 übermittelt.
- Der Druckserver 110 bereitet die Daten für das ausgewählte Druckgerät 108 auf und leitet diese in einem Schritt 118 an ausgewählte Druckgerät 108 weiter.

Die Erfindung beschränkt sich in ihrer Ausführungsform auf die Ansprüche.

## Patentansprüche

1. Druckverfahren, bei dem ein mobiles Endgerät (102) über eine Schnittstelle für eine drahtlose Kommunikation mit einem Server (110) kommuniziert und über den Server (110) zum Ausdruck bestimmte Daten an ein Druckgerät (108) sendet, wobei auf dem mobilen Endgerät (102) ein Nutzerprofil hinterlegt ist, welches für zumindest ein Druckgerät (104, 106, 108) jeweils
- das Druckgerät (104, 106, 108) bezeichnende Informationen und
- einen dem Druckgerät (104, 106, 108) zugeordneten, nutzerspezifischen Schlüssel umfasst, anhand dessen eine Berechtigung des Nutzers zur Verwendung des Druckgeräts seitens des Servers geprüft werden kann,
und wobei das Verfahren folgendes umfasst:
- Herstellen einer Kommunikationsverbindung zwischen dem mobilen Endgerät (102) und dem Server (110),
- Senden des Nutzerprofils durch das mobile Endgerät (102) an den Server (110);
- Ermitteln, durch den Server (110), von nutzbaren Druckgeräten (104, 106, 108), wobei ein Druckgerät als für den Nutzer nutzbar anzusehen ist, wenn
- das Druckgerät technisch erreichbar ist und
- das Nutzerprofil einen Schlüssel umfasst, welcher die Berechtigung des Nutzers zur Verwendung des Druckgeräts anzeigt;
- Senden von Informationen zu den nutzbaren Druckgeräten (104, 106, 108) von dem Server (110) an das mobile Endgerät (102),
- Wahl, auf dem mobilen Endgerät (102), eines nutzbaren Druckgeräts (108), auf Basis der gesendeten Informationen;
- Senden der zum Ausdruck bestimmten Daten oder von Informationen, die den Server (110) in die Lage versetzen, die zum Ausdruck vorgesehenen Daten von einem entfernten Speicherort in einem Datennetz abzurufen, von dem mobilen Endgerät (102) an den Server (110), zusammen mit das ausgewählte Druckgerät bezeichnenden Informationen
- Senden der zum Ausdruck bestimmten Daten durch den Server an das gewählte Druckgerät (108);
wobei auf dem Server (110) Druckerobjekte definiert sind, welche dem mobilen Endgerät (102) als nutzbare Druckgeräte übermittelt werden,
wobei für ein Druckgerät (104, 106, 108) mehrere Druckerobjekte definiert sein können, die jeweils verschiedene Druckeinstellungen aufweisen,
wobei die Druckerobjekte derart nutzerspezifisch angelegt sind, dass auf dem Server (110) jedes Druckerobjekt mindestens einem Nutzer zugeordnet ist.

2. Druckverfahren nach Anspruch 1, wobei die nutzbaren Druckgeräte (104, 106, 108) in Reaktion auf die Aktivierung einer Druckfunktion auf dem mobilen Endgerät (102) ermittelt werden.

3. Druckverfahren nach Anspruch 1 oder 2, wobei das Nutzerprofil auf der Datenverarbeitungseinrichtung, auf der der Server (110) installiert ist, oder einer anderen Datenverarbeitungseinrichtung (112, 114) erstellt und/oder verwaltet werden und nach Erstellung an das mobile Endgerät (102) übertragen werden.

4. Druckverfahren nach einem der voranstehenden Ansprüche, wobei der Schlüssel in der Adresse des Druckgeräts (104, 106, 108) enthalten ist.

5. Anordnung mit mindestens einem Chip und/oder Prozessor, wobei die Anordnung derart eingerichtet ist, dass ein Druckverfahren gemäß einem der Ansprüche 1 bis 4 ausführbar ist.

6. Computerprogramm, das es einer Datenverarbeitungseinrichtung ermöglicht, nachdem es in Speichermittel der Datenverarbeitungseinrichtung geladen worden ist, ein Druckverfahren gemäß einem der Ansprüche 1 bis 4 durchzuführen.

7. Computerlesbares Speichermedium, auf dem ein Programm gespeichert ist, das es einer Datenverarbeitungseinrichtung ermöglicht, nachdem es in Speichermittel der Datenverarbeitungseinrichtung geladen worden ist, ein Druckverfahren gemäß einem der Ansprüche 1 bis 4 durchzuführen.

## Claims

1. A printing method, in which a mobile terminal device (102) communicates with a server (110) via an interface for wireless communication and sends data intended for print-out to a printer (108) via the server (110), wherein a user profile, which comprises, for at least one printer (104, 106, 108),
- information designating the printer (104, 106, 108)
- a user-specific key assigned to the printer (104, 106, 108), with the aid of which a right of the user to use the printer can be checked by the server, is filed on the mobile terminal device (102),
and wherein the method comprises the following:
- establishment of a communication connection between the mobile terminal device (102) and the server (110),
- sending of the user profile to the server (110) by the mobile terminal device (102);
- determination, by the server (110), of usable printers (104, 106, 108), wherein a printer shall be deemed as usable for the user if
- the printer is technically accessible and
- the user profile comprises a key which displays the right of the user to use the printer;
- sending of information on the usable printers (104, 106, 108) to the mobile terminal device (102) by the server (110),
- selection, on the mobile terminal device (102), of a usable printer (108) on the basis of the sent information;
- sending of the data intended for print-out or of information, which enables the server (110) to retrieve the data intended for print-out from a remote storage location in a data network, by the mobile terminal device (102) to the server (110), together with information designating the selected printer
- sending of the data intended for print-out to the selected printer (108) by the server;
wherein printer objects, which are communicated to the mobile terminal device (102) as usable printers, are defined on the server (110),
wherein multiple printer objects, which each have different print settings, can be defined for a printer (104, 106, 108),
wherein the printer objects are user-specifically designed in such a way that each printer object is assigned to at least one user on the server (110).

2. The printing method according to Claim 1, wherein the usable printers (104, 106, 108) are determined in response to the activation of a print function on the mobile terminal device (102).

3. The printing method according to Claim 1 or 2, wherein the user profile is created and/or managed on the data processing device on which the server (110) is installed or on another data processing device (112, 114) and transmitted to the mobile terminal device (102) after creation.

4. The printing method according to any one of the preceding claims, wherein the key is contained in the address of the printer (104, 106, 108).

5. An assembly having at least one chip and/or processor, wherein the assembly is set up in such a way that a printing method according to any one of Claims 1 to 4 can be carried out.

6. A computer program, which after having been loaded in storage means of a data processing device, enables the data processing device to carry out a printing method according to any one of Claims 1 to 4.

7. A computer-readable storage medium on which is stored a program, which after having been loaded in storage means of a data processing device, enables the data processing device to carry out a printing method according to any one of Claims 1 to 4.

## Revendications

1. Procédé d'impression, dans lequel un terminal mobile (102) communique avec un serveur (110) par le biais d'une interface pour une communication sans fil et envoie par le serveur (110), des données définies pour impression à une imprimante (108), dans lequel un profil d'utilisateur est stocké sur le terminal mobile (102), lequel pour au moins une imprimante (104, 106, 108) respectivement,
- l'imprimante (104, 106, 108) comprend des informations significatives et
- une clé spécifique à l'utilisateur attribuée à l'imprimante (104, 106, 108) à l'aide de laquelle une autorisation de l'utilisateur à utiliser l'imprimante peut être vérifiée par le serveur,
et dans lequel le procédé comprend ce qui suit :
- établissement d'une liaison de communication entre le terminal mobile (102) et le serveur (110),
- envoi du profil d'utilisateur par le terminal mobile (102) au serveur (110) ;
- détermination, par le serveur (110), d'imprimantes (104, 106, 108) utilisables, dans lequel une imprimante est considérée comme utilisable pour l'utilisateur, lorsque
- l'imprimante peut être atteinte sur le plan technique et
- le profil d'utilisateur comprend une clé qui indique l'autorisation de l'utilisateur à utiliser l'imprimante ;
- envoi d'informations sur les imprimantes (104, 106, 108) utilisables, par le serveur (110) au terminal mobile (102),
- sélection sur le terminal mobile (102), d'une imprimante (108) utilisable en se basant sur les informations envoyées ;
- envoi des données définies pour l'impression ou d'informations qui mettent le serveur (110) en position d'appeler les données prévues pour l'impression d'un lieu de stockage éloigné dans un réseau de données, du terminal mobile (102) au serveur (110), conjointement avec des informations spécifiant l'imprimante sélectionnée,
- envoi des données définies pour l'impression par le serveur à l'imprimante sélectionnée (108) ;
dans lequel des objets d'imprimante sont définis sur le serveur (110) qui sont transmis au terminal mobile (102) en tant qu'imprimantes utilisables,
dans lequel plusieurs objets d'imprimante peuvent être définis pour une imprimante (104, 106, 108), qui présentent respectivement des paramètres d'impression différents,
dans lequel les objets d'imprimante sont placés spécifiquement à l'utilisateur de telle sorte que sur le serveur (110), chaque objet est attribué à au moins un utilisateur.

2. Procédé d'impression selon la revendication 1, dans lequel les imprimantes (104, 106, 108) utilisables sont déterminées en réaction à l'activation d'une fonction d'impression sur le terminal mobile (102).

3. Procédé d'impression selon la revendication 1 ou 2, dans lequel le profil d'utilisateur est établi et/ou géré sur le dispositif de traitement de données sur lequel le serveur (110) est installé, ou un autre dispositif de traitement des données (112, 114), et est transmis au terminal mobile (102) après l'établissement.

4. Procédé d'impression selon l'une des revendications précédentes, dans lequel la clé est contenue dans l'adresse de l'imprimante (104, 106, 108).

5. Agencement comprenant au moins une puce et/ou un processeur, dans lequel l'agencement est conçu pour qu'un procédé d'impression selon l'une des revendications 1 à 4 puisse être exécuté.

6. Programme informatique qui permet à un dispositif de traitement de données, après qu'il a été chargé dans des supports de stockage du dispositif de traitement de données, d'exécuter un procédé d'impression selon l'une des revendications 1 à 4.

7. Support de stockage lisible sur ordinateur, sur lequel un programme est stocké, qui permet à un dispositif de traitement de données, après qu'il a été chargé dans des supports de stockage du dispositif de traitement de données, d'exécuter un procédé d'impression selon l'une des revendications 1 à 4.
